(19) **Europäisches Patentamt**

**European Patent Office**

**Office européen des brevets**

(11) **EP 0 713 958 B1**

(12) **EUROPEAN PATENT SPECIFICATION**

(45) Date of publication and mention
of the grant of the patent:
**03.04.2002 Bulletin 2002/14**

(51) Int Cl.⁷: **F01L 1/26**

(21) Application number: **95116746.9**

(22) Date of filing: **24.10.1995**

(54) **Internal combustion engine**

**Brennkraftmaschine**

**Moteur à combustion interne**

(84) Designated Contracting States:
**DE FR GB IT**

(30) Priority: **24.10.1994 JP 28416694**

(43) Date of publication of application:
**29.05.1996 Bulletin 1996/22**

(73) Proprietor: **YAMAHA HATSUDOKI KABUSHIKI KAISHA**
**Iwata-shi Shizuoka-ken, 438 (JP)**

(72) Inventor: **Yoshikawa, Masaaki**
**Iwata-shi, Shizuoka-ken, 438 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 611 883     DE-A- 3 838 305**
**US-A- 5 099 812**

**Description**

This invention relates to an internal combustion engine of the four-cycle type comprising: a cylinder unit having at least one cylinder bore and at least one cylinder head fastened to said cylinder unit through a plurality of bolts, at least three air intake openings formed in said cylinder head lying substantially symmetrically arranged to a plane containing the axis of said cylinder bore and extending perpendicularly to the axis of rotation of a crankshaft, a plurality of exhaust openings lying substantially symmetrically arranged to said plane, the number of which is smaller than the number of said air intake openings, at least three air intake valves supported for reciprocation along respective reciprocal axis by said cylinder head and defining a first intersecting angle between a first axes and said axis of said cylinder bore and a second intersecting angle between at least two second axes and said axis of said cylinder bore, a plurality of exhaust valves supported for reciprocation along respective reciprocal axes by said cylinder head and defining a plurality of third intersecting angles between the reciprocal axes and said axis of said cylinder bore, and an air intake camshaft and an exhaust camshaft arranged at the top of said cylinder head, whereas said at least two intersecting angles fulfil the following inequation: $\theta_1 < \theta_2$.

Such an internal combustion engine is known from DE 38 38 305 A.

The above four-cycle engines evince the below described structure of the prior art.

To wit, with the cylindrical axis oriented longitudinally, there is a cylinder unit containing cylinder bores and a cylinder head fastened to the top surface of the cylinder unit.

When one of the foregoing cylinders is viewed from the top, there is a row of a plurality of air intake openings extending left and right in the cylinder head on one side of the cylinder bore in the fore-aft direction, and on the other side, a row extending left and right of a plurality of exhaust openings. On the one hand, air intake valves open and close the foregoing air intake openings, and on the other, exhaust valves open and close the foregoing exhaust openings.

A cam housing is also integrally formed on the top surface side of the foregoing cylinder head, and on the left and right sides inside this cam housing are an air intake camshaft and an exhaust camshaft which run parallel fore and aft. The top ends of foregoing air intake valves are engaged by the cams on the foregoing air intake camshaft, while the top ends of the foregoing exhaust valves are engaged by the cams on the foregoing exhaust camshaft.

The rotation of the foregoing air intake camshaft and exhaust camshaft, which are linked to the drive of the engine crankshaft, cause the cam linkages to open and dose the respective air intake valves and exhaust valves appropriately, thereby allowing an air/fuel mixture to be taken into the cylinder bores from the air intake openings, where it is compressed and then burned, to produce the engine power. The combustion gases then are expelled through the foregoing exhaust openings.

However, in the above described structure of the prior art, since there is a plurality of bolts to attach the cylinder head to the cylinder unit, air intake valves and exhaust valves, the size of the engine will increase to accommodate their emplacement.

This problem has been addressed by locating the bolts, air intake valves and exhaust valves in close proximity to each other in order to make the engine more compact.

However, when using only this approach, the foregoing bolts, air intake valves and exhaust valves become so close as to make their inspection and maintenance operations very difficult.

Further, by placing both the air intake valves and exhaust valves close to each other, the lower surfaces of the respective valves no longer line up, and irregular protrusions and depressions in the combustion chamber ceiling are likely as a result. As such protrusions and depressions become larger, engine performance declines due to the resulting delay in the combustion rate of the air fuel mixture inside the foregoing combustion chamber.

It is therefore an objective of the present invention to provide an internal combustion engine being more compact, to assure ease of inspection and maintenance of bolts, air intake valves and exhaust valves, and to improve engine performance even in engines equipped with a plurality of bolts to fasten the cylinder head to the cylinder, air intake valves, and exhaust valves for each cylinder.

According to the present invention, the aforementioned object is solved for an internal combustion engine in that at least one third intersecting angle is larger than the at least two intersecting angles and in that a first distance between said axis of said cylinder bore and the axis of said air intake camshaft, a second distance between said axis of said cylinder bore and the centre axis of said bolts adjacent to said air intake openings a third distance between said axis of said cylinder bore and the centre axis of said bolts adjacent to said exhaust openings and a fourth distance between said axis of said cylinder bore and the axis of said exhaust camshaft (44) fulfil in the following combined inequation-equation: $L_1 < L_2 \approx L_3 < L_4$ and that the camshafts being located relative to the bolts so as to facilitate accessibility of the bolts without first removing the camshafts.

Thus, it is possible to optimally position the various air intake valves and exhaust valves to facilitate their inspection and maintenance and to remove or insert, respectively, the head bolts with ease.

This means that the bolts located on the same side as the air intake openings are relatively distance from the axis of the cylinder on the side with numerous air intake valves thereby preventing the space separating the various parts from becoming too narrow.

On the other hand, with regard to the bolts on the exhaust side, since there are fewer exhaust valves than the air intake valves even though the third length $L_3$ < fourth length $L_4$, it is still possible to prevent interference between these bolts and the various exhaust valves. Since these bolts are located in close proximity to the exhaust valves, it is possible to have a more compact structure.

Further, because the first intersecting angle $\theta_1$ < second intersecting angle $\theta_2$, the plurality of air intake openings that are opened and closed by the air intake valves are shifted in the fore-aft direction with respect to each other, and, compared with the case of these air intake openings being simply positioned linearly, extending left and right, it is possible to place the air intake openings closer to each other in the left-right direction.

Accordingly, the various air intake openings can be positioned closer to each other, and further, their respective air intake valves are also located closer to each other.

According to another preferred embodiment of the invention bearing areas in said cam housing for axially support of the air intake camshaft and exhaust camshaft respectively are arranged between lifters.

By so doing, the space between the left-right adjacent lifters can be used efficiently for the location of the bearings which support the air intake camshaft and the exhaust camshaft

According to a further preferred embodiment of the invention said reciprocal axis of said air intake valves are inclined towards each other to converge downwards into the direction of said cylinder.

By so doing, when the air intake valves are in the closed position in the air intake openings an imaginary line connecting their bottom surfaces assumes an overall spherical shape, thereby creating a smooth ceiling surface in the combustion chamber. When compared with the ceiling surfaces of the prior art, with their protrusions and depressions, the combustion rate of an air fuel mixture in the combustion chamber is higher.

Further preferred embodiments of the present invention are laid down in further dependent claims.

Hereinafter the present invention is illustrated and explained in greater detail by means of a preferred embodiment in conjunction with accompanying drawings, wherein:

Fig. 1, is a sectional side view of the internal combustion engine according to a preferred embodiment of the invention,

Fig. 2, is a sectional top view of the embodiment of Fig. 1,

Fig. 3, is a front view of air intake valves,

Fig. 4, is a view along line 4-4 of Fig. 1,

Fig. 5, is a view along line 5-5 of Fig. 1, and

Fig. 6, is a figure showing the opening and closing operations of an air intake control valve.

An embodiment of the present invention will be described below.

In the Figures, reference number 1 represents a four-cycle, in-line, multi cylinder engine of the type mounted in motorcycles or automobiles; to facilitate explanation, the arrow labeled "Fr" in the Figures shows the front, and references below to "left" and "right" will be based upon facing in that direction.

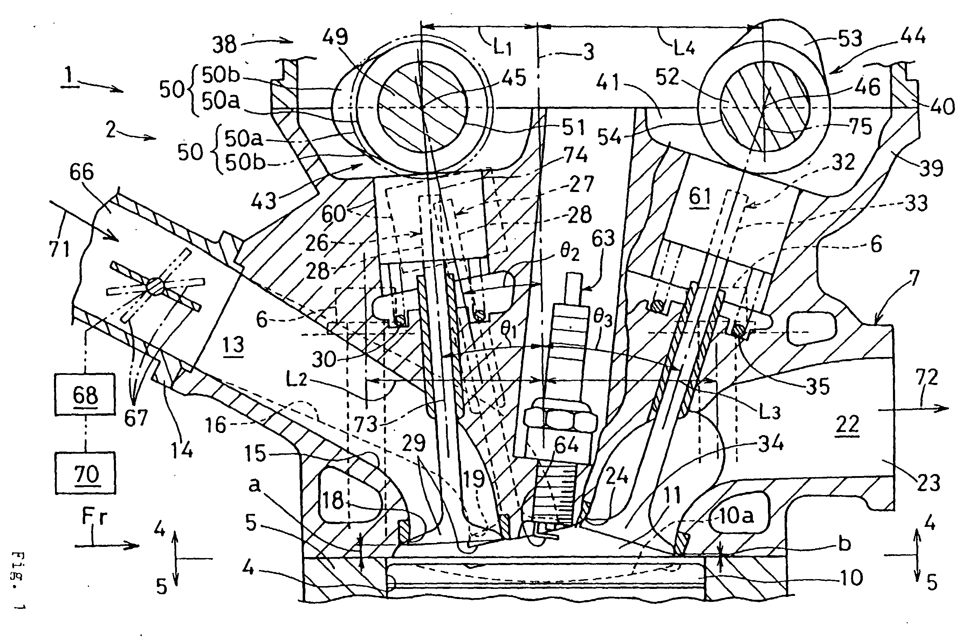

Reference number 2 is a cylinder in the foregoing engine 1. As shown in Figure 1, when the axis 3 of the cylinder 2 is viewed in a longitudinal orientation, the foregoing cylinder 2 comprises a cylinder unit 5 with cylinder bores 4, with a cylinder head 7 fastened to the top surface of the foregoing cylinder unit 5 by a plurality of bolts 6 situated around each of the foregoing cylinder bores 4. Of course the cross-sectional shape of the foregoing cylinder bores 4 is circular, and their axial center is the same as that of the foregoing axis 3.

Pistons 10 have been inserted into the foregoing cylinder unit 5 and slide freely up and down. The combustion chambers 11 are formed in the space bounded by the foregoing cylinder unit 5, cylinder head 7 and pistons 10.

An air intake passage 13 is formed at the rear of the foregoing cylinder head 7 and runs fore and aft. The opening for one end of this intake passage 13 is in the rear surface of the cylinder head 7, and this opening is connected to the air intake pipe 14. On the upstream end of this air intake pipe 14 is a fuel supply means (not shown) such as a fuel injection valve or carburetor.

The other end of the foregoing air intake passage 13 branches toward engine 1 into a plurality (three) of mutually independent branches including a center branch passage 15, and a pair of side branch passages 16 which branch to the left and right sides of the center branch passage 15. The center branch passage 15, and the respective side branch passages 16, 16 open into the respective air intake openings 18, 19 into the combustion chamber 11.

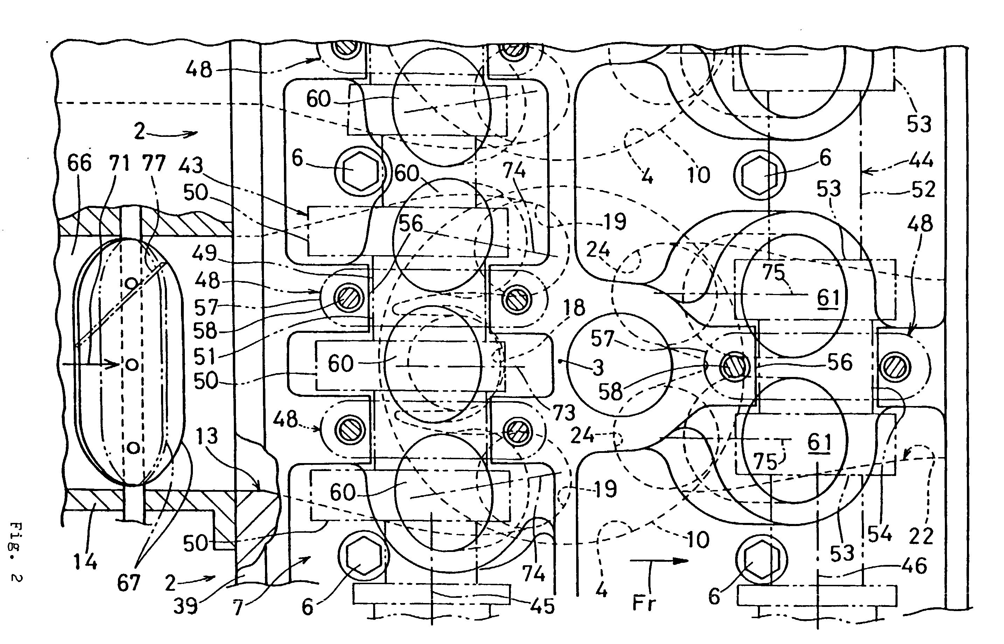

As is especially notable from the top view of the cylinder 2 in Figure 2, the foregoing air intake openings 18, 19 are positioned on one side of the cylinder bore 4 in the cylinder head 7 in the fore-aft direction (on the aft side), and are aligned in a row running left and right. In this case, there is a fore-aft staggering of position among the air intake openings 18 formed on the downstream end of the central branch passage 15, and the air intake openings 18, 19 to enable them to be located closer together left and right for a more compact design.

An exhaust passage 22 extending in the fore-aft direction is present in the front of the foregoing cylinder head 7. The opening of one end of this exhaust passage 22 is at the front surface of the cylinder head 7, where it is connected to the exhaust pipe. The other end of the foregoing exhaust passage 22 is directed toward the foregoing combustion chamber 11 and it branches into a plurality (two) of branches, composed of a pair of left and right branch passages 23, 23.

As is especially apparent from the top view of the cylinder 2 in Figure 2, the foregoing exhaust openings 24, 24 are located on the other side (front side) of the foregoing cylinder bore 4 in the cylinder head 7, and they are aligned in a row extending left and right.

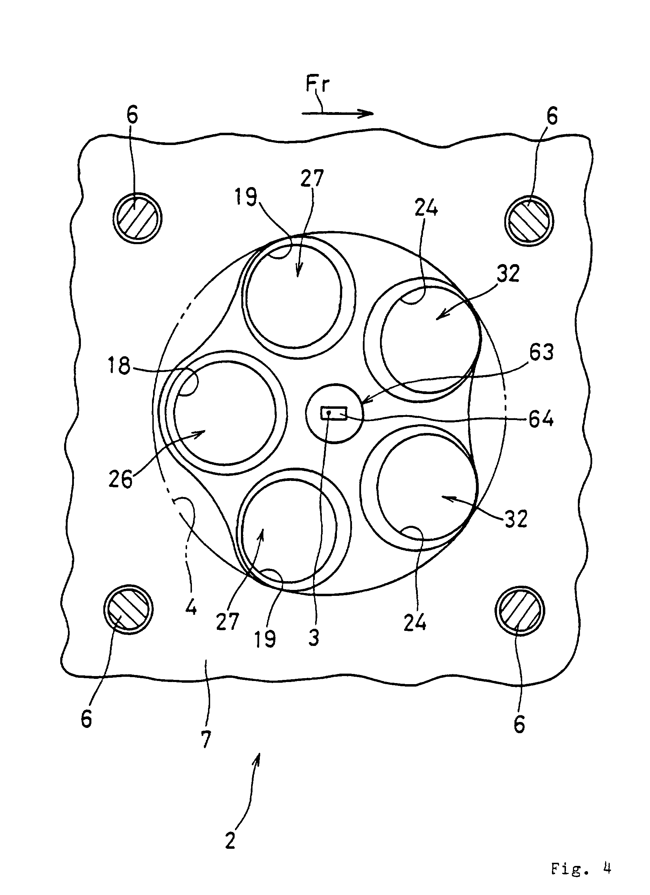

Figures 1 through 4 show the air intake valves 26, 27 that open and close the respective foregoing air intake openings 18, 19. These air intake valves 26, 27 are composed of valve stems 28 supported in the foregoing cylinder head 7 to be freely slidable up and down, and of valve bodies 29 which are formed integrally on the bottom ends of the foregoing valve stems 28 and which pass downward through the foregoing air intake openings 18, 19. Each of these valve bodies 29 can close the foregoing air intake openings 18, 19 from the bottom side. Each of the foregoing air intake valves 26, 27 is held normally upward by the force of a spring 30.

Exhaust valves 32 are installed to open and close each of the foregoing exhaust openings 24. Each of these exhaust valves 32 is composed of a valve stem 33 supported in the foregoing cylinder head 7 to freely slide up and down, and of a valve body 34 which passes downward through the foregoing exhaust opening 24. Each of the foregoing exhaust valve bodies 34 can close the corresponding exhaust valve opening 24 from the bottom side, and the foregoing exhaust valves 32 are each held normally upward by the force of a spring 35.

A dynamic valve mechanism 38 is mounted atop the foregoing cylinder head 7. This dynamic valve mechanism 38 includes a cam housing 39 which is integrally formed on the top surface side of the foregoing cylinder head 7 and which comprises an upward-facing opening. The opening for this cam housing 39 is covered by a removable cylinder-head cover 40. The cam chamber 41 is present in the space encompassed by this cam housing 39 and the cylinder head cover 40.

The air intake camshaft 43 and the exhaust camshaft 44 are mounted in the foregoing cam chamber 41, the axis 45 of the air intake camshaft 43 and the axis 46 for the exhaust camshaft 44 being located on the left and right sides, respectively, and running parallel to each other. The air intake camshaft 43 and the exhaust camshaft 44 are respectively axially supported in the foregoing cam housing 39 by bearings 48 in a manner such that they may freely be rotated around their axes 45, 46. The foregoing air intake camshaft 43 is positioned above the air intake valves 26, 27 and the foregoing exhaust camshaft 44 is positioned above the exhaust valves 32.

The foregoing air intake camshaft 43 is composed of a main shaft 49 centered on its axis 45, and of cam beaks 50 formed integrally on the foregoing main shaft 49 and located to correspond with the foregoing air intake valves 26, 27. The cam beaks 50 are composed of a disc-shaped base 50a centered on the foregoing axis 45 and a beak 50b, which projects from the outside circumferential surface of this base 50a in a single area. The journals 51 for the main shaft 49 are located between the foregoing cam beaks 50, 50 and are axially supported by the foregoing bearings 48.

The foregoing exhaust camshaft 44 is composed of a main shaft 52 centered on its axis 46, and of cam beaks 53 formed integrally on the foregoing main shaft 52. The journals 54 for the main shaft 52 are located between the foregoing cam beaks 53, 53 and these journals 54 are axially supported by the foregoing bearings 48.

The foregoing bearings 48 are in the form of shaft grooves 56 present in the inside bottom surface of the foregoing cam housing 39 and evincing a semi-circular sectional shape and supporting the above mentioned journals 51, 54, and of caps 57 which cover the top of the journals 51, 54 inside the shaft grooves 56. These caps 57 are fastened to the foregoing cam housing 39 by bolts 58.

A lifter 60 is attached to the top end of each of the valve stems 28 of the foregoing air intake valves 26, 27, and these lifters 60 slide up and down with the valve stems 28 inside the cam housing 39. A lifter 61 is also attached to the top end of each of the valve stems 33 of the foregoing exhaust valves 32, and these lifters 61 slide up and down with the valve stems 33 inside the cam housing 39.

The foregoing air intake camshaft 43 and exhaust camshaft 44 are lined to and driven by the crankshaft of the engine 1. The rotation of the foregoing camshaft 43 causes the upper ends of the foregoing air intake valves 26, 27 to be engaged by the corresponding cam beaks 50 on the foregoing air intake camshaft 43 through the foregoing lifters 60. This engagement, along with the force exerted by the above mentioned springs 30, causes the opening and closing operations of these air intake valves 26, 27.

Also, with the rotation of the foregoing exhaust camshaft 43, the top ends of the foregoing exhaust valves 32 are engaged by the corresponding cam beaks 53 on the foregoing exhaust camshaft 43 through the foregoing lifters 61. This engagement, along with the force exerted by the above mentioned springs 35, causes the opening and closing operations of the exhaust valves 32.

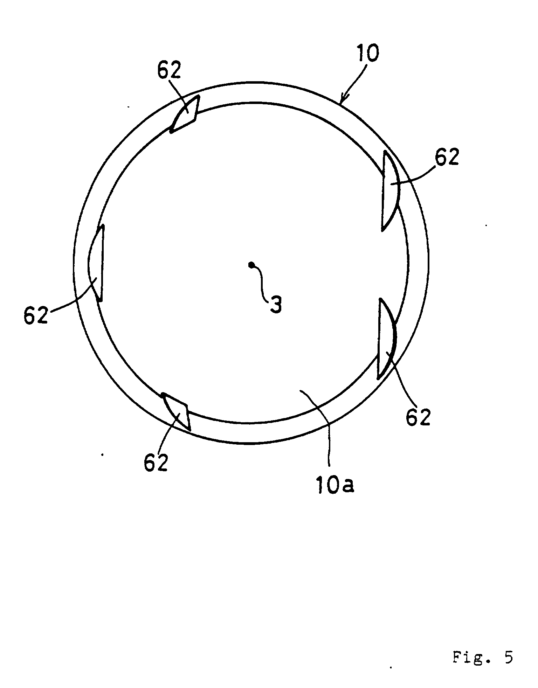

As especially evident in Figures 1, 3 and 5, the crown surface 10a of the piston 10 is a spherical concave surface, so formed in order to avoid interference with the valve bodies 29, 34 of the foregoing air intake valves 26, 27 and exhaust valves 32; further, recesses 62 are present around the outside perimeter of the same crown surface 10a also to avoid interference. Because the crown surface 10a of the piston 10 is a spherical concave surface, the recesses 62 may be relatively shallow, thereby making the overall crown surface 10a comparatively smoother.

As shown in Figure 1, spark plugs 63 are attached to the foregoing cylinder head 7, and the discharge areas 64 of each plug 63 are positioned at the approximate centre of the foregoing combustion chamber 7 with respect to the axis 3 of the foregoing cylinder 2, at the edge of the foregoing combustion chamber 11.

As shown in Figures 1 and 2, the inside of the foregoing air intake pipe 14 connects with the foregoing air intake passage 13 to become an air intake passage 66, and there is a butterfly type air intake control valve 67 mounted therein that adjusts the aperture of the air intake passage 66. Actuator 68 is a servo motor or other means used to rotate this air intake control valve 67.

An engine control unit 70 provides the electronic control for the foregoing engine 1. The foregoing spark plugs 63 and the actuator 68 are electrically connected with this engine control unit 70.

When the engine 1 is operating, and when the foregoing piston 10 starts to descend from its upper dead point at the beginning of the intake stroke, the cam engagement with the air intake camshaft 43 causes the various air intake valves 26, 27 to open the respective air intake openings 18, 19. When this happens, air from the atmosphere passes through the air intake passages 66, 13 and begins to flow into the cylinder bore 4. At this time, the aforementioned fuel injection valve or carburetor supplies fuel to the intake air in the foregoing air intake passage 66 to generate an air/fuel mixture 71. When this air fuel mixture 71 is taken into the foregoing cylinder bore 4, a tumbling flow is generated therein.

Next, when the foregoing piston 10 begins to move upward during the compression stroke, compression occurs in the foregoing combustion chamber 11, and at this time, the foregoing engine control unit 70 fires the spark plug 63 to ignite the mixture 71, generating the power stroke that is converted into the output of the engine 1.

Thereupon, during the exhaust stroke, the burned gases resulting from the foregoing combustion are expelled as exhaust 72 through the foregoing exhaust openings 24 and then through the exhaust passage 22.

The foregoing air intake camshaft 43 and exhaust camshaft 44 are individually rotated by the crankshaft of the engine 1, and a variable valve timing device further makes it possible to vary the opening and closing timing for the air intake valves 26, 27. This variable valve timing device is electrically connected with the foregoing engine control unit 70, which can advance or delay the opening and closing valve timing for the foregoing air intake valves 26, 27 based upon the extent of knocking.

The above mentioned air intake control valve 67, along with the variable valve timing device, controls the tumbling flow of the foregoing air/fuel mixture 71, and may additionally increase the compression ratio. The foregoing air intake control valve 67 can be set in the fully open position as shown by the solid lines in Figures 1 and 2, in the fully closed position as shown by the double-dot broken lines in Figures 1 and 2, or in the half-open position as shown by the single dot broken line in Figure 1.

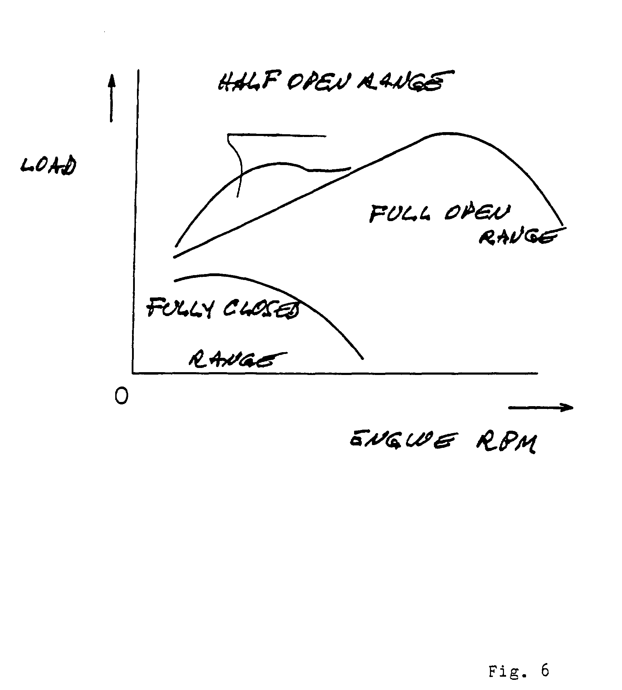

Further, as shown in Figures 1 and 6, when the engine 1 is operation at low RPM, low load conditions, and when there is but little intake of the air/fuel mixture 71, the engine control unit 70 fully closes the air intake control valve 67; at low RPM, high load conditions, it is half open, and otherwise, (during high RPM operations), it is fully open.

The engine performance is improved by these means.

In Figures 1 through 4, when viewed from the side surface, when the first intersecting angle $\theta_1$ is that angle formed between the axis 3 of the foregoing cylinder 2 and the axis 73 of the center air intake valve 26 from among the air intake valves 26, 27 arrayed left and right, when the second intersecting angle $\theta_2$ is that angle formed between the axis 3 of the same cylinder 2 and the axis 74 of the side air intake valve 27, and when the third intersecting angle $\theta_3$ is that angle formed between the axis 3 of the same cylinder 2 and the axis 75 of the foregoing exhaust valve 32, then the first intersecting angle $\theta_1$ < second intersecting angle $\theta_2$ < third intersecting angle $\theta_3$.

As is especially evident in Figure 1, and as stated above, the exhaust openings 24 are fewer than the air intake openings 18, 19, hence there are also fewer exhaust valves 32 to open and close the foregoing exhaust openings 24 than there are air intake valves 26, 27 to open and close the foregoing air intake openings 18, 19. As a result, there is more latitude in the positioning of the exhaust valves 32 than there is in the positioning of the air intake valves 26, 27.

At this point, as described above, the third intersecting angle $\theta_3$ is increased and the foregoing exhaust valves 32 are moved farther away from the axis 3 of the cylinder 2, amounting to a step which, while taking away some of the latitude in the positioning of these exhaust valves 32, on the other hand improves the latitude in the positioning the foregoing air intake valves 26, 27, which are more numerous.

As a result, even when the foregoing air intake valves 26, 27 and exhaust valves 32 are located in close proximity to each other to make the engine 1 more compact, the air intake valves 26, 27 and exhaust valves 32 are optimally positioned for ease of maintenance and inspection.

Further, the first intersecting angle $\theta_1$ < the second intersecting angle $\theta_2$, as described above, thereby dictating that the plurality air intake openings 18, 19 opened and closed by the air intake valves 26, 27 be shifted fore and aft with respect to each other, which feature, compared to the air intake openings 18, 19 being positioned along a straight line left to right, allows them to be closer to each other in the left-right direction, thereby making for a more compact design.

When viewed from the side surface, in the above described structure, when the first length $L_1$ is defined as the length from the axis 3 of the cylinder 2 to the axis 45 of the air intake camshaft 43, the second length $L_2$ will be the length from the axis 3 of the same cylinder 2 to the center of the bolt 6 on the side of the air intake openings 18, 19, the third length $L_3$ will be the length from the axis 3 of the same cylinder 2 to the center of the bolt 6 on the side of the exhaust openings 24, and the fourth length will be the length from the axis 3 of the same cylinder 2 to the axis 46 of the exhaust camshaft 44, and then the first length $L_1$ < the second length $L_2 \approx$ third length $L_3$ < fourth length $L_4$.

By so doing, the bolts 6 on the air intake opening 18, 19 side can be moved farther away from the more numerous air intake valves 26, 27 away from the axis 3 of the cylinder 2, thereby assuring sufficient space separating the various parts.

On the other hand, since the bolts 6 on the exhaust opening 24 side are positioned on the side where there are fewer exhaust valves 32 compared to the number of the foregoing air intake valves 26, 27 as described above, even when the third length $L_3$ < fourth length $L_4$, it is possible to prevent interference between the bolts 6 and the various exhaust valves 32 even while bringing the bolts 6 closer to the exhaust valves 32 for a more compact design.

Further, the foregoing bearings 48 are located between left and right adjacent lifters 60, 61.

The above design allows the space between the left and right adjacent lifters 60, 61 to be effectively utilized for the positioning of the bearings 48 that axially support the air intake camshaft 43 and the exhaust camshaft 44.

Further, as shown in Figure 2, midway in the length of the side branch passages 16, an arc-shaped bend moves them toward the outside and away from the foregoing center branch passage 15. Further, the centers of the foregoing side branch passages 16 on their downstream ends are approximately in line with the axes 74 of the air intake valves 27, and further, the downstream ends of the foregoing side branch passages 16 are shaped so that they are directed toward the axis 3 of the cylinder bore 4, through the air intake openings 19.

As a result, there is little drag on the flow of the air/fuel mixture 71 flowing through the foregoing side branch passages 16 and this smooth flow is directed toward the centre of the combustion chamber 11 to facilitate its later combustion.

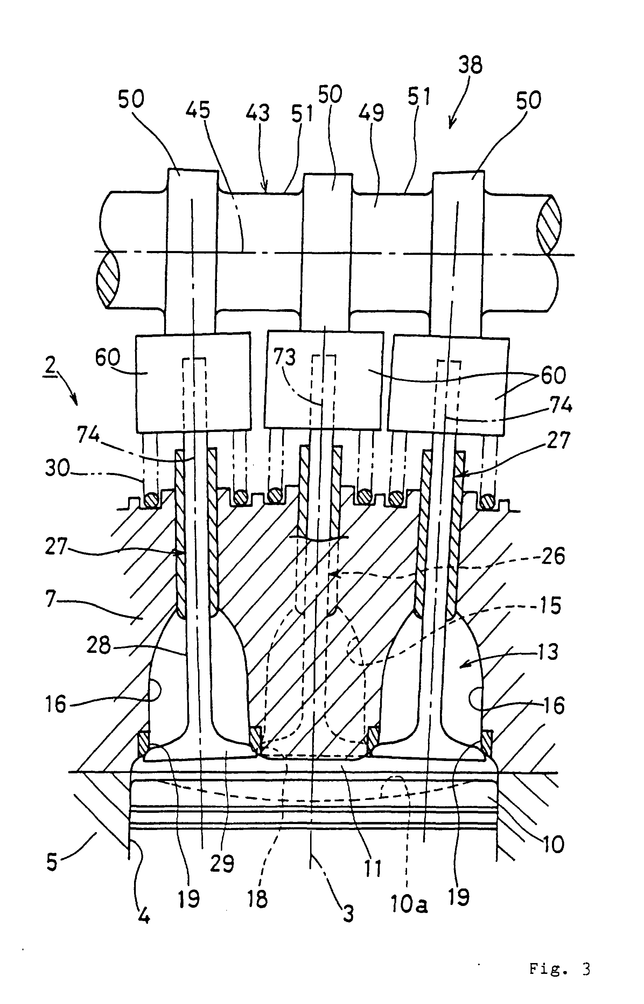

Also, as is especially evident in the front view of Figure 3, the axes 73, 74 of the left and right air intake valves 26, 27 are tilted so that they converge in the downward direction.

As a result, when the air intake openings 18, 19 are closed, the bottom surface of the air intake valves 26, 27, when linked by an imaginary line, form an overall spherical concave surface; in other words, they form a smooth ceiling surface in the combustion chamber 11. This feature, along with the above described factor of the smooth crown surface 10a of the piston 10, serves to raise the combustion of the air/fuel mixture 71 inside the foregoing combustion chamber 11.

Further, since the side air intake valves 27 are tilted with respect to the axis 3 of the cylinder 2, firstly, in order that the top surface of each of the lifters 60 of the foregoing air intake valves 27 make linear contact with the outside circumferential surface of the cam beak 50, the outside circumferential surface of these cam beaks 50 is tapered in the axial direction.

Secondly, the lifters 60 for the air intake valves 26, 27 are the same size and shape to provide interchangeability. As a result, as is especially evident in Figure 1, the dimensions from the top end of the side air intake valves 27 to the axis 45 of the air intake camshaft 43 are larger than the corresponding dimensions from the top end of the center air intake valve 26 to the axis 45 of the air intake camshaft 43. Thus, the diameters of the bases 50a of the cam beaks 50 on the camshaft 43 that correspond to the side air intake valves 27 (shown by the double-dot broken line in Figure 1) are greater than the diameters of the bases 50a of the cam beak 50 on the air intake camshaft 43 that correspond to the foregoing center air intake valve 26 (shown by the solid line in Figure 1).

As shown in Figure 1, the dimension a from the mating surface of the foregoing cylinder unit 5 and the cylinder head 7 to the bottom end of the valve body 29 of the air intake valve 26 when closing the centre air intake valve opening 18 is greater than the dimension b from the same mating surface to the bottom ends of the valve bodies 34 of each of the exhaust valves when closing the exhaust openings 24.

As a result, finding room for air intake valve bodies 29 of the three air intake valves 26, 27 is more difficult than for the two exhaust valves 32; therefore, the area in which these valve bodies 29 for the air intake valves 26, 27 can be located has been increased to ease the positioning of the valve bodies 29.

In the embodiment shown in the Figures, the fuel injection valve used as a fuel supply has been mounted on the cylinder head 7, but the fuel could equally well be provided further downstream of the foregoing air intake control valves 67 in the combustion chamber 11, or it could be injected directly into the air intake passage 13.

As shown by the single dot broken line in Figure 2, a part of the air intake control valve 67 has been cut away to form a cut-out area 77. Thus, when the foregoing air intake control valve 67 fully closes the air intake passage 66, the required aperture of the air intake passage 66 is still maintained through the air intake control valve 67, thereby preventing engine shutdown.

According to the present invention, three or more air intake openings are arrayed left and right on one side, in the fore-aft direction, of the cylinder bore in the cylinder head, while on the other side, fewer exhaust openings are arrayed left and right. And in the case where air intake valves are set in the foregoing air intake openings to open and close them, and exhaust valves are set in the foregoing exhaust openings to open and close them, when viewed from the side, and when the first intersecting angle is that angle between the cylindrical axis and the axis of the center air intake valve, when the second intersecting angle is that angle formed between the same cylindrical axis and the axis of the left and right side air intake valves, and when the third intersecting angle is that angle formed between the same cylindrical axis and the axis of the exhaust valves, then the first intersecting angle < second intersecting angle < third intersecting angle.

There are fewer exhaust openings on one side in the area of the foregoing cylinder bore in the cylinder head than there are air intake openings on the other side, and consequently, fewer exhaust valves to open and close the foregoing exhaust openings than there are air intake valves to open and close the foregoing air intake openings. As a result, there is more latitude in the placement of the exhaust valves than for the air intake valves.

At this point, however, this invention increases the third intersecting angle as described above and shifts the foregoing exhaust valves farther away from the axis of the cylinder, thereby decreasing the latitude in positioning the exhaust valves, but on the other hand providing improved latitude in the location of the more numerous air intake valves.

Accordingly, the foregoing air intake valves and the exhaust valves can respectively be set closer to each other, providing an optimal placement for the air intake valves and exhaust valves to facilitate their inspection and maintenance.

Further, since the first intersecting angle < second intersecting angle as described above, the air intake openings which are opened and closed by the air intake valves are consequently shifted fore and aft with respect to each other, thereby enabling them to be closer together in the left-right direction than would be possible if they were simply laid out linearly in the left-right direction. As a result, it is possible to position the air intake openings closer to each other, and hence to position the air intake valves closer to each other. This makes the engines more compact.

In the above described configuration, if the first length is defined as the length from the cylindrical axis to the axis of the air intake cam shaft, the second length as the length from the same cylindrical axis to the bolt holes on the air intake opening side, the third length as the length from the same cylindrical axis to the bolt holes on the exhaust opening side, and the fourth length as the length from the same cylindrical axis to the axis of the exhaust camshaft, the relationship among them may be set so that the first length < second length ≒ the third length < fourth length.

By so doing, it is possible to move apart the bolts on the air intake side, i.e. the side with the more numerous air intake valves, farther from the cylindrical axis, thereby preventing the various parts from being too close together.

On the other hand, even if the bolts on the exhaust side are positioned so that the third length < fourth length, since there are fewer exhaust valves than the foregoing air intake- valves, it is still possible to prevent interference between these bolts and the exhaust valves. On the other hand, the bolts and exhaust valves are still located in close proximity to each other, thereby allowing compact design.

Accordingly, the positioning of the foregoing bolts and exhaust valves has been optimized for ease of inspection and maintenance even while making the engine more compact.

The bearings for axially supporting the air intake camshaft and the exhaust camshaft inside the cam housing may also be placed between the left and right adjacent lifters.

This makes the engines even more compact.

Further, when viewed from the front, the axes of the left and right air intake valves may be tilted so that they converge in the downward direction.

So doing allows for the imaginary line connecting the bottom surfaces of the valve bodies of the various air intake valves in the closed position to form a spherical surface, in other words, a smooth ceiling surface for the combustion chamber. This design improves the engine performance by raising the combustion rate of the air/fuel mixture inside the foregoing combustion chamber.

**Claims**

1. Internal combustion engine (1) of the four-cycle type comprising:

   a cylinder unit (5) having at least one cylinder bore (4) and at least one cylinder head (7) fastened to said cylinder unit (5) through a plurality of bolts (6),
   at least three air intake openings (18,19) formed in said cylinder head (7) lying substantially symmetrically arranged to a plane containing the axis (3) of said cylinder bore (4) and extending perpendicularly to the axis of rotation of a crankshaft,
   a plurality of exhaust openings (24) lying substantially symmetrically arranged to said plane, the number of which is smaller than the number of said air intake openings (18,19),
   at least three air intake valves (26,27) supported for reciprocation along respective reciprocal axis (73,74) by said cylinder head (7) and defining a first intersecting angle ($\theta_1$) between a first axes (73) and said axis (3) of said cylinder bore (4) and a second intersecting angle ($\theta_2$) between at least two second axes (74) and said axis (3) of said cylinder bore (4),

a plurality of exhaust valves (32) supported for reciprocation along respective reciprocal axes (75) by said cylinder head (7) and defining a plurality of third intersecting angles ($\theta_3$) between the reciprocal axes (75) and said axis (3) of said cylinder bore (4), and

an air intake camshaft (43) and an exhaust camshaft (44) arranged at the top of said cylinder head (7),

whereas said at least two intersecting angles ($\theta_1$, $\theta_2$) fulfil the following inequation:

$$\theta_1 < \theta_2$$

**characterized in that**

at least one third intersecting angle ($\theta_3$) is larger than the at least two intersecting angles ($\theta_1$, $\theta_2$) and **in that** a first distance ($L_1$) between said axis (3) of said cylinder bore (4) and the axis (45) of said air intake camshaft (43), a second distance ($L_2$) between said axis (3) of said cylinder bore (4) and the centre axis of said bolts (6) adjacent to said air intake openings (18,19), a third distance ($L_3$) between said axis (3) of said cylinder bore (4) and the centre axis of said bolts (6) adjacent to said exhaust openings (24) and a fourth distance ($L_4$) between said axis (3) of said cylinder bore (4) and the axis (46) of said exhaust camshaft (44) fulfil in the following combined inequation-equation:

$$L_1 < L_2 \approx L_3 < L_4$$

and that the camshafts (43,44) being located relative to the bolts (6) so as to facilitate accessibility of the bolts (6) without first removing the camshafts (43,44).

2. Internal combustion engine (1) according to claim 1, **characterised by** a cam housing (39) integrally formed with said cylinder head (7).

3. Internal combustion engine (1) according to claim 2, **characterised in that** said air intake camshaft (43) and said exhaust camshaft (44) are arranged in parallel within said cam housing (39).

4. Internal combustion engine (1) according to at least one of the preceding claims 1 to 3, **characterised in that** lifters (60,61) are positioned between the top ends of the air intake valves (26,27) and the air intake camshaft (43) and the top ends of the exhaust valves (32) and the exhaust camshaft (44), respectively, engaging the respective cam beaks (50,53).

5. Internal combustion engine (1) according to claim 4, **characterised in that** bearing areas (48) in said cam housing (39) for axially support of the air intake camshaft (43) and exhaust camshaft (44), respectively, are arranged between said lifters (60,61).

6. Internal combustion engine (1) according to at least one of the preceding claims 1 to 5, **characterised in that** said reciprocal axis (73,74) of said air intake valves (26,27) are inclined towards each other to converge downwards into the direction of said cylinder (2).

7. Internal combustion engine (1) according to at least one of the preceding claims 1 to 6, **characterised in that** an air intake passage (13) is provided leading to three associated air intake openings (18,19) controlled by two side air intake valves (27) and one centre air intake valve (26), said centre air intake valve (26) and the associated air intake opening (18) being disposed substantially on said plane and between said pair of intake openings (19) belonging to said side intake valves (27), said reciprocal axis (73) of said centre air intake valve (26) coincides with said plane.

8. Internal combustion engine (1) according to claim 7, **characterised in that** the air intake opening (18) associated with the centre air intake valve (26) being disposed closer to the axis (3) of the cylinder bore (4) than the pair of air intake openings (19) of the side air intake valves (27).

9. Internal combustion engine (1) according to at least one of preceding claims 1 to 8, **characterised in that** the cam beaks (50) of the air intake camshaft (43) are integrally formed with a main shaft (49) and each comprising a disk-shaped base (50a) centred on the axis (45) of the air intake camshaft (43) and the beak (50b) protruding from said base (50a).

10. Internal combustion engine (1) according to at least one of the preceding claims 1 to 9, **characterised in that** journals (51) for the main shaft (49) of said air intake camshaft (43) are located between cam beaks (50) of said air intake camshaft (43).

11. Internal combustion engine (1) according to claims 5 and 10, **characterised in that** said journals (51) are axially supported by said bearing areas (48).

12. Internal combustion engine (1) according to at least one of the preceding claims 1 to 11, **characterised**

**in that** the cam beaks (53) of the exhaust camshaft (44) are integrally formed with a main shaft (52) of said camshaft (44) and protruding therefrom.

13. Internal combustion engine (1) according to at least one of the preceding claims 1 to 12, **characterised in that** journals (54) for the main shaft (52) of said exhaust cam shaft (44) are located between cam beaks (53) of said exhaust camshaft (44).

14. Internal combustion engine (1) according claims 5 and 13, **characterised in that** said journals (54) are axially supported by said bearing areas (48).

15. Internal combustion engine (1) according to at least one of the preceding claims 5 to 14, **characterised in that** the bearing areas (48) comprise shaft grooves (56) of semi-circular sectional shape disposed in the inside bottom surface of the cam housing (39) and caps (57) covering the top of journals (51,54) for the air intake camshaft (43) and exhaust camshaft (44), respectively, inside said grooves (56).

16. Internal combustion engine (1) according to at least one of the preceding claims 1 to 15, **characterised in that** the crown surface end (10a) of a piston (10) within said cylinder (2) has a spherical concave shape to avoid interference with valve bodies (29,34) of air intake valves (26,27) and exhaust valves (32), respectively.

17. Internal combustion engine (1) according to claim 16, **characterised by** recesses (62) disposed around the circumference of said crown surface (10a).

18. Internal combustion engine (1) according to at least one of the preceding claims 1 to 17, **characterised in that** an air intake control valve (67) is arranged within an air intake passage (66) leading to said air intake openings (18,19).

19. Internal combustion engine (1) according to claim 18, **characterised in that** said control valve is a butterfly type control valve (67).

20. Internal combustion engine (1) according to at least one of the preceding claims 1 to 19, **characterised in that** the air intake camshaft (43) and the exhaust camshaft (44) are individually driven by said crankshaft.

21. Internal combustion engine (1) according to at least one of the preceding claims 1 to 20, **characterised in that** a variable valve timing device varies the valve timing of the air intake valves (26,27).

22. Internal combustion engine (1) according to one of the preceding claims 18 to 21, **characterised in that** the tumbling flow of an air-fuel mixture (71) is controlled by said air intake control valve (67) and said variable valve timing device.

23. Internal combustion engine (1) according to at least one of the preceding claims 9 to 22, **characterised in that** the diameters of the basis (50a) of the cam beaks (50) corresponding to the side air intake valves (27) are larger than the diameter of the base (50a) of the cam beak (50) corresponding to the centre air intake valve (26).

24. Internal combustion engine (1) according to at least on of the preceding claims 7 to 23, **characterised in that** a distance (a) between the upper surface of said cylinder unit (5) and the bottom end of a valve body (29) of the centre air intake valve (26) is larger than the distance (b) between the upper surface of said cylinder unit (5) and the bottom end of a valve body (34) of an exhaust valve (32) when both valves (26,32) are in a closed position.

25. Internal combustion engine (1) according to at least one of the preceding claims 18 to 24, **characterised in that** the air intake control valve (67) comprises a cut-out area (77) for preventing engine shut-down when said control valve (67) is in the closed position.

26. Internal combustion engine (1) according to at least one of claims 1 to 25, **characterised in that** a spark plug (63) is disposed inclined with respect to the axis (3) of the cylinder bore (4) towards the exhaust valves (32).

**Patentansprüche**

1. Brennkraftmaschine (1) des Viertakt- Typs mit:

einer Zylindereinheit (5), die zumindest eine Zylinderbohrung (4) und zumindest einen Zylinderkopf (7) hat, befestigt an der Zylindereinheit (5) durch eine Mehrzahl von Schrauben (6), zumindest drei Lufteinlaßöffnungen (18, 19), gebildet in dem Zylinderkopf (7), die im wesentlichen symmetrisch zu einer Ebene angeordnet liegen, die die Achse (3) der Zylinderbohrung (4) enthält und die sich rechtwinklig zu der Rotationsachse einer Kurbelwelle erstreckt,
einer Mehrzahl von Auslaßöffnungen (24), die im wesentlichen symmetrisch zu der Ebene angeordnet liegen, wobei deren Anzahl kleiner als die Anzahl der Lufteinlaßöffnungen (18, 19) ist, zumindest drei Lufteinlaßventilen (26, 27), gelagert zum Hin- und Hergehen entlang der jeweiligen Bewegungsachse (73, 74) durch den Zylinderkopf (7) und die einen ersten Schnittwinkel ($\theta_1$) zwischen einer ersten Achse (73) und der Achse (3) der Zylinderbohrung (4) und einem zweiten Schnittwinkel ($\theta_2$) zwischen zumindest zwei zweiten Achsen (74) und der Achse (3) der Zylinderbohrung (4) bilden,
einer Mehrzahl von Auslaßventilen (32), gelagert zum Hin- und Hergehen entlang der jeweiliger Bewegungsachse (75) durch den Zylinderkopf (7) und die eine Mehrzahl von dritten Schnittwinkeln ($\theta_3$) zwischen den Bewegungsachsen (75) und der Achse (3) der Zylinderbohrung (4) bilden, und
einer an der Oberseite des Zylinderkopfes (7) angeordneten Lufteinlaß- Nockenwelle (43) und einer Auslaß- Nockenwelle (44),

wobei die zumindest zwei Schnittwinkel ($\theta_1$, $\theta_2$) die folgende Ungleichung erfüllen:

$$\theta_1 < \theta_2$$

**dadurch gekennzeichnet, daß**
zumindest ein dritter Schnittwinkel ($\theta_1$) größer als die zumindest zwei Schnittwinkel ($\theta_1$, $\theta_2$) ist und daß ein erster Abstand ($L_1$) zwischen der Achse (3) der Zylinderbohrung (4) und der Achse (45) der Lufteinlaß- Nockenwelle (43), ein zweiter Abstand ($L_2$) zwischen der Achse (3) der Zylinderbohrung (4) und der Mittelachse der zu den Lufteinlaßöffnungen (18, 19) benachbarten Schrauben (6), ein dritter Abstand ($L_3$) zwischen der Achse (3) der Zylinderbohrung (4) und der Mittelachse der zu den Auslaßöffnungen (24) benachbarten Schrauben (6) und ein vierter Abstand ($L_4$) zwischen der Achse (3) der Zylinderbohrung (4) und der Achse (46) der Auslaß- Nockenwelle (44) die folgende kombinierte Ungleichung- Gleichung erfüllen:

$$L_1 < L_2 \approx L_3 < L_4$$

und daß die Nockenwellen (43, 44) im Verhältnis zu den Schrauben (6) so angeordnet sind, daß die Zugänglichkeit der Schrauben (6) erleichtert ist, ohne zuerst die Nockenwellen (43, 44) zu entfernen.

2. Brennkraftmaschine (1) nach Anspruch 1, **gekennzeichnet durch** ein Nockengehäuse (39), einstückig mit dem Zylinderkopf (7) gebildet.

3. Brennkraftmaschine (1) nach Anspruch 2, **dadurch gekennzeichnet, daß** die Lufteinlaß- Nockenwelle (43) und die Auslaß- Nockenwelle (44) parallel innerhalb des Nockengehäuses (39) angeordnet sind.

4. Brennkraftmaschine (1) nach zumindest einem der vorhergehenden Ansprüche 1 bis 3, **dadurch gekennzeichnet, daß** die Heber (60, 61) jeweils zwischen den oberen Enden der Lufteinlaßventile (26, 27) und der Lufteinlaß- Nockenwelle (43) und den oberen Enden der Auslaßventile (32) und der Auslaß- Nockenwelle (44) angeordnet sind, die mit den jeweiligen Nockenhörnern (50, 53) im Eingriff sind.

5. Brennkraftmaschine (1) nach Anspruch 4, **dadurch gekennzeichnet, daß** die Lagerflächen (48) in dem Nockengehäuse (39), jeweils zum axialen Lagern der Lufteinlaß-Nockenwelle (43) und der Auslaß- Nockenwelle (44), zwischen den Hebern (60, 61) angeordnet sind.

6. Brennkraftmaschine (1) nach zumindest einem der vorhergehenden Ansprüche 1 bis 5, **dadurch gekennzeichnet, daß** die Bewegungsachsen (73, 74) der Lufteinlaßventile (26, 27) zueinander geneigt sind, um abwärts in Richtung des Zylinders (2) zu konvergieren.

7. Brennkraftmaschine (1) nach zumindest einem der vorhergehenden Ansprüche 1 bis 6, **dadurch gekennzeichnet, daß** ein Lufteinlaßkanal (13) vorgesehen ist, der zu drei zugehörigen Lufteinlaßöffnungen (18,19) führt, gesteuert durch zwei Seiten-Lufteinlaßventile (27) und ein Mittel- Lufteinlaßventil (26), wobei das Mitteleinlaßventil (26) und die zugehörige Lufteinlaßöffnung (18) im wesentlichen auf der Ebene und zwischen dem Paar von Einlaßöffnungen (19) angeordnet sind, die zu den Seiten-Lufteinlaßventilen (27) gehören, wobei die Bewegungsachse (73) des Mittel-Lufteinlaßventiles (26) mit der Ebene übereinstimmt.

8. Brennkraftmaschine (1) nach Anspruch 7, **dadurch gekennzeichnet, daß** die Lufteinlaßöffnung (18) mit dem Mittel- Lufteinlaßventil (26) zugeordnet ist, näher zu der Achse (3) der Zylinderbohrung (4) angeordnet ist, als das Paar von Lufteinlaßöffnungen (19) der Seiten- Lufteinlaßventile (27).

9. Brennkraftmaschine (1) nach zumindest einem der vorhergehenden Ansprüche 1 bis 8, **dadurch gekennzeichnet, daß** die Nockenhörner (50) der Lufteinlaß- Nockenwelle (43) einstückig mit einer Hauptwelle (49) gebildet sind und jedes eine scheibenförmige Basis (50a) mittig auf der Achse (45) der Lufteinlaß- Nockenwelle (43) und der Höhenvorsprung (50b), der von der Basis (50a) vorspringt, aufweist.

10. Brennkraftmaschine (1) nach zumindest einem der vorhergehenden Ansprüche 1 bis 9, **dadurch ge-**

**kennzeichnet, daß** Drehzapfen (51) für die Hauptwelle (49) der Lufteinlaß- Nockenwelle (43) zwischen Nockenhömer (50) der Lufteinlaß- Nockenwelle (43) angeordnet ist.

11. Brennkraftmaschine (1) nach den Ansprüchen 5 und 10, **dadurch gekennzeichnet, daß** die Drehzapfen (51) axial durch die Lagerbereiche (48) gelagert sind.

12. Brennkraftmaschine (1) nach zumindest einem der vorhergehenden Ansprüche 1 bis 11, **dadurch gekennzeichnet, daß** die Nockenhömer (53) der Auslaß- Nockenwelle (44) einstückig mit einer Hauptwelle (52) der Nockenwelle (44) gebildet sind und davon vorspringen.

13. Brennkraftmaschine (1) nach zumindest einem der vorhergehenden Ansprüche 1 bis 12, **dadurch gekennzeichnet, daß** Drehzapfen (54) für die Hauptwelle (52) der Auslaß- Nockenwelle (44) zwischen Nockenhörnem (53) der Auslaß- Nockenwelle (44) angeordnet sind.

14. Brennkraftmaschine (1) nach den Ansprüchen 5 und 13, **dadurch gekennzeichnet, daß** die Drehzapfen (54) axial durch die Lagerflächen (48) gelagert sind.

15. Brennkraftmaschine (1) nach zumindest einem der vorhergehenden Ansprüche 5 bis 14, **dadurch gekennzeichnet, daß** die Lagerflächen (48) Wellennuten (56) von Halbkreis- Abschnittsform aufweisen, angeordnet in der Innenseiten- Bodenfläche des Nockengehäuses (39) und Verschlußkappen (57), angeordnet jeweils die Oberseiten der Drehzapfen (51, 54) für die Lufteinlaß- Nockenwelle (43) und Auslaß- Nokkenwelle (44), innerhalb der Nuten (56), abzudecken.

16. Brennkraftmaschine (1) nach zumindest einem der vorhergehenden Ansprüche 1 bis 15, **dadurch gekennzeichnet, daß** das Kronen- Oberflächenende (10a) eines Kolbens (10) innerhalb des Zylinders (2) eine kugelförmig- konkave Form hat, um jeweils Kollision mit den Ventilkörpern (29, 34) der Lufteinlaßventile (26, 27) und der Auslaßventile (32) zu vermeiden.

17. Brennkraftmaschine (1) nach Anspruch 16, **gekennzeichnet durch** um den Umfang der Kronen- Oberfläche (10a) angeordnete Ausnehmungen (62).

18. Brennkraftmaschine (1) nach zumindest einem der vorhergehenden Ansprüche 1 bis 17, **dadurch gekennzeichnet, daß** ein Lufteinlaß- Steuerventil (67) innerhalb eines Lufteinlaßkanales (66), der zu den Lufteinlaßöffnungen (18, 19) führt, angeordnet ist.

19. Brennkraftmaschine (1) nach Anspruch 18, **dadurch gekennzeichnet, daß** das Steuerventil ein Klappentyp- Steuerventil (67) ist.

20. Brennkraftmaschine (1) nach zumindest einem der vorhergehenden Ansprüche 1 bis 19, **dadurch gekennzeichnet, daß** die Lufteinlaß- Nockenwelle (43) und die Auslaß-Nockenwelle (44) individuell durch die Kurbelwelle angetrieben werden.

21. Brennkraftmaschine (1) nach zumindest einem der vorhergehenden Ansprüche 1 bis 20, **dadurch gekennzeichnet, daß** eine veränderbare Ventilzeitpunkt- Vorrichtung den Ventilzeitpunkt des Lufteinlaßventiles (26, 27) verändert.

22. Brennkraftmaschine (1) nach zumindest einem der vorhergehenden Ansprüche 18 bis 21, **dadurch gekennzeichnet, daß** die Fallströmung einer Luft- Kraftstoffmischung (71) durch das Lufteinlaß- Steuerventil (67) und die veränderbare Ventilzeitpunkt- Steuerrichtung gesteuert wird.

23. Brennkraftmaschine (1) nach zumindest einem der vorhergehenden Ansprüche 9 bis 22, **dadurch gekennzeichnet, daß** die Durchmesser der Basis (50a) der Nockenhömer (50), die den Seiteneinlaßventilen (27) entsprechen, größer sind, als der Durchmesser der Grundfläche(50a) des Nockenhornes (50), das dem Mittel- Lufteinlaßventil (26) entspricht.

24. Brennkraftmaschine (1) nach zumindest einem der vorhergehenden Ansprüche 7 bis 23, **dadurch gekennzeichnet, daß** ein Abstand (a) zwischen der oberen Oberfläche der Zylindereinheit (5) und dem Bodenende eines Ventilkörpers (29) des Mittel-Lufteinlaßventiles (26) größer als der Abstand (b) zwischen der oberen Oberfläche der Zylindereinheit (5) und dem Bodenende eines Ventilkörpers (34) eines Auslaßventiles (32) ist, wenn beide Ventile (26, 32) in geschlossener Position sind.

25. Brennkraftmaschine (1) nach zumindest einem der vorhergehenden Ansprüche 18 bis 24, **dadurch gekennzeichnet, daß** das Lufteinlaß- Steuerventil (67) eine ausgeschnittene Bereich (77) zum Verhindern von Motorausfall aufweist, wenn das Steuerventil (67) in der geschlossenen Position ist,

26. Brennkraftmaschine (1) nach zumindest einem der Ansprüche 1 bis 25, **dadurch gekennzeichnet, daß** eine Zündkerze (63) geneigt in Bezug zu der Achse (3) der Zylinderbohrung (4) in Richtung der Auslaßventile (32) vorgesehen ist.

## Revendications

**1.** Moteur à combustion interne (1) du type à quatre temps comprenant:

un bloc cylindre (5) ayant au moins un alésage de cylindre (4) et au moins une culasse (7) fixée sur ledit bloc cylindre (5) par une pluralité de boulons (6), au moins trois ouvertures d'admission d'air (18, 19) formées dans ladite culasse (7) placées sensiblement symétriquement, agencées dans un plan contenant l'axe (3) dudit alésage de cylindre (4) et s'étendant perpendiculairement à l'axe de rotation d'un vilebrequin,

une pluralité d'ouvertures d'échappement (24) situées sensiblement symétriquement par rapport audit plan, dont le nombre est inférieur au nombre desdites ouvertures d'admission d'air (18, 19),

au moins trois soupapes d'admission d'air (26, 27) supportées pour effectuer un mouvement alternatif dans l'axe de mouvement alternatif (73, 74) respectif passant par ladite culasse (7) et définissant un premier angle d'intersection $(\theta_1)$ entre un premier axe (73) et ledit axe (3) dudit alésage de cylindre (4) et un deuxième angle d'intersection $(\theta_2)$ entre au moins deux deuxièmes axes (74) et ledit axe (3) dudit alésage de cylindre (4),

une pluralité de soupapes d'échappement (32) supportées pour effectuer un mouvement alternatif le long d'axes de mouvement alternatif (75) respectifs, passant par ladite culasse (7) et définissant une pluralité de troisième angle d'intersection $(\theta_3)$ entre les axes de mouvement alternatif (75) et ledit axe (3) dudit alésage de cylindre (4), et

un arbre à cames d'admission d'air (43) et un arbre à cames d'échappement (44) agencés en partie haute de ladite culasse (7),

dans lequel lesdits au moins deux angles d'intersection $(\theta_1, \theta_2)$ satisfont à l'inéquation suivante:

$$\theta_1 < \theta_2$$

**caractérisé en ce que**
au moins un troisième angle d'intersection $(\theta_3)$ est supérieur au moins deux angles d'intersections $(\theta_1, \theta_2)$ et **en ce qu'**une première distance $(L_1)$ entre ledit axe (3) dudit alésage de cylindre (4) de l'axe (45) dudit arbre à cames d'admission (43), une deuxième distance $(L_2)$ entre ledit axe (3) dudit alésage de cylindre (4) et l'axe central desdits boulons (6) adjacent auxdites ouvertures d'admission d'air (18, 19), une troisième distance $(L_3)$ entre ledit axe (3) dudit alésage de cylindre (4) et l'axe central desdits boulons (6) adjacent auxdites ouvertures d'admission d'air (24), et une quatrième distance $(L_4)$ entre ledit axe (3) dudit alésage de cylindre (4) et l'axe (46) dudit arbre à cames d'échappement (44) satisfont à l'inéquation combinée suivante:

$$L_1 < L_2 \approx L_3 < L_4$$

et **en ce que** les arbres à cames (43, 44) sont placés par rapport aux boulons (6) de manière à faciliter l'accessibilité aux boulons (6) sans avoir à d'abord enlever les arbres à cames (43, 44).

**2.** Moteur à combustion interne (1) selon la revendication 1, **caractérisé par** un carter à cames (39) formé d'une seule pièce avec ladite culasse (7).

**3.** Moteur à combustion interne (1) selon la revendication 2, **caractérisé en ce que** ledit arbre à cames d'admission d'air (43) et ledit arbre à cames (44) sont montés parallèlement dans ledit carter à cames (39).

**4.** Moteur à combustion interne (1) selon au moins l'une des revendications 1 à 3 précédentes, **caractérisé en ce que** des leveurs ou poussoirs (60, 61) sont positionnés entre les extrémités supérieures des soupapes d'admission d'air (26, 27) et l'arbre à cames d'admission d'air (43) et les extrémités supérieures des soupapes d'échappement (32) et l'arbre à cames d'échappement (44), respectivement, pour venir en prise avec les becs de came (50,53) respectifs.

**5.** Moteur à combustion interne (1) selon la revendication 4, **caractérisé en ce que** des surfaces de palier (48), prévues dans ledit carter à cames (39) pour supporter axialement l'arbre à cames d'admission d'air (43) et l'arbre à cames d'échappement (44), respectivement, sont agencées entre lesdits leveurs ou poussoirs (60, 61).

**6.** Moteur à combustion interne (1) selon au moins l'une des revendications précédentes, **caractérisé en ce que** lesdits axes de rotation (73, 74) desdites soupapes d'admission sont inclinés en direction l'un de l'autre pour converger vers le bas dans la direction dudit cylindre (2).

**7.** Moteur à combustion interne (1) selon au moins l'une des revendications 1 à 6 précédentes, **caractérisé en ce qu'**un passage d'admission d'air (13) est prévu menant à trois ouvertures d'admission d'air (18, 19) associées, commandé par deux soupapes d'admission d'air (27) et une soupape d'admission d'air centrale (26), ladite soupape d'admission d'air centrale (26) et l'ouverture d'admission d'air (18) associées étant disposées sensiblement sur ledit plan et entre ladite paire d'ouvertures d'admission (19) appartenant auxdites soupapes d'admission d'air (27), ledit axe de déplacement alternatif (73) de ladite soupape d'admission d'air centrale (26) coïncidant avec ledit plan.

8. Moteur à combustion interne (1) selon la revendication 7, **caractérisé en ce que** l'ouverture d'air d'admission (18) associée à la soupape d'admission d'air centrale (26) est disposée plus près de l'axe (3) de l'alésage de cylindre (4) que la paire d'ouvertures d'admission d'air des soupapes d'admission d'air latérales (27).

9. Moteur à combustion interne (1) selon au moins l'une des revendications 1 à 8 précédentes, **caractérisé en ce que** les becs de came (50) de l'arbre à cames d'admission d'air (43) sont formés d'une seule pièce avec un arbre principal (49) et chacun comprenant une base (50a) discoïde centrée sur l'axe (45) de l'arbre à cames d'admission d'air (43) et le bec (50b) faisant saillie depuis ladite base (50a).

10. Moteur à combustion interne (1) selon au moins l'une des revendications 1 à 9 précédentes, **caractérisé en ce que** des paliers (51) pour l'arbre principal (49) dudit arbre à cames d'admission d'air (43) sont placés entre les becs de came (50) dudit arbre à cames d'admission d'air (43).

11. Moteur à combustion interne (1) selon les revendications 5 et 10, **caractérisé en ce que** lesdits paliers (51) sont supportés axialement par lesdites surfaces de tourillonnement (48).

12. Moteur à combustion interne (1) selon au moins l'une des revendications 1 à 11 précédentes, **caractérisé en ce que** les becs de came (53) de l'arbre à cames d'échappement (44) sont formés d'une seule pièce avec un arbre principal (52) dudit arbre à cames (44) et en faisant saillie.

13. Moteur à combustion interne (1) selon au moins l'une des revendications 1 à 12 précédentes, **caractérisé en ce que**

   des paliers de tourillonnement (54) pour l'arbre principal (52) dudit arbre à cames d'échappement (44) sont placés entre les becs de came (53) dudit arbre à cames d'échappement (44).

14. Moteur à combustion interne (1) selon les revendications 5 et 13, **caractérisé en ce que** lesdits paliers de tourillonnement (54) sont supportés axialement par lesdites surfaces de palier (48).

15. Moteur à combustion interne (1) selon au moins l'une des revendications 5 à 14 précédentes, **caractérisé en ce que** les surfaces de palier (48) comprennent des gorges d'arbre (56) de forme semi-circulaire, disposées dans la surface inférieure intérieure du carter à cames (39) et du capuchon (57) couvrant la partie haute des paliers (51, 54) pour l'arbre à cames d'admission d'air (43) et l'arbre à cames à cames d'échappement (44) respectivement à l'intérieur desdites gorges (56).

16. Moteur à combustion interne (1) selon au moins l'une des revendications 1 à 15 précédentes, **caractérisé en ce que** l'extrémité de surface de couronne (10a) d'un piston (10) à l'intérieur dudit cylindre (2) a une forme concave sphérique pour éviter toute interférence avec les corps de soupape (29, 34) des soupapes d'admission d'air (26, 27) et des soupapes d'échappement (32), respectivement.

17. Moteur à combustion interne (1) selon la revendication 16, **caractérisé en ce que** les cavités (62) sont disposées autour de la circonférence de ladite surface de couronne (10a).

18. Moteur à combustion interne (1) selon au moins l'une des revendications 1 à 17 précédentes, **caractérisé en ce qu'**une soupape de commande d'admission d'air (67) est agencée à l'intérieur d'un passage d'admission d'air (66) menant auxdites ouvertures d'air (18, 19).

19. Moteur à combustion interne (1) selon la revendication 18, **caractérisé en ce que** ladite soupape de commande est une soupape de commande de type papillon (67).

20. Moteur à combustion interne (1) selon au moins l'une des revendications 1 à 19 précédentes, **caractérisé en ce que** l'arbre à cames d'admission d'air (43) et l'arbre à cames d'échappement (44) sont entraînés individuellement par ledit arbre à cames.

21. Moteur à combustion interne (1) selon au moins l'une des revendications 1 à 20 précédentes, **caractérisé en ce qu'**un dispositif de cadencement variable de soupape fait varier le cadencement des soupapes d'admission (26, 27).

22. Moteur à combustion interne (1) selon au moins l'une des revendications 18 à 21 précédentes, **caractérisé en ce que** le débit de renversement d'un mélange air-carburant (71) est commandé par ladite soupape de commande d'admission (67) et ledit dispositif de cadencement variable de soupape.

23. Moteur à combustion interne (1) selon au moins l'une des revendications 9 à 22 précédentes, **caractérisé en ce que** les diamètres de la base (50a) des becs de came (50) correspondant aux soupapes d'admission d'air latérales (27) sont supérieurs au diamètre de la base (50a) du bec de came (50) correspondant à la soupape d'admission d'air centrale (26).

24. Moteur à combustion interne (1) selon au moins l'une des revendications 7 à 23 précédentes, **caractérisé en ce qu'**une distance (a) entre la surface supérieure dudit bloc cylindre (5) et l'extrémité inférieure d'un corps de soupape (29) de ladite soupape d'admission d'air centrale (26) est supérieure à la distance (b) entre la surface supérieure dudit bloc cylindre (5) et l'extrémité inférieure d'un corps de soupape (34) d'une soupape d'échappement (32), lorsque les deux soupapes (26, 32) sont en position fermée.

25. Moteur à combustion interne (1) selon au moins l'une des revendications 18 à 24 précédentes, **caractérisé en ce que** la soupape de commande d'admission (67) comprend une surface de découpure (73) pour empêcher tout arrêt du moteur, lorsque ladite soupape de commande (67) est à la position fermée.

26. Moteur à combustion interne (1) selon au moins l'une des revendications 1 à 25, **caractérisé en ce qu'**une bougie d'allumage (63) est disposée de façon inclinée par rapport à l'axe (3) de l'alésage de cylindre (4), en direction des soupapes d'échappement (32).

Fig. 1

Fig. 2

EP 0 713 958 B1

Fig. 3

Fig. 4

Fig. 5

Fig. 6